# EUROPEAN PATENT SPECIFICATION

(11) **EP 3 011 168 B1**
(45) Date of publication and mention of the grant of the patent: **12.02.2020**
(21) Application number: 14730971.0
(22) Date of filing: 10.06.2014
(51) Int. Cl.: F03B 3/12, F03B 15/00, F03B 13/26, F03B 17/06

(54) **WATER CURRENT POWER GENERATION STRUCTURE**
WASSERSTROMERZEUGUNGSSYSTEME
STRUCTURE DE PRODUCTION D'ÉNERGIE HYDROLIENNE

(30) Priority: 18.06.2013 GB 201310818
(43) Date of publication of application: 27.04.2016
(73) Proprietor: Tidal Generation Limited, Stafford, ST17 4LX (GB)
(72) Inventor: VIGARS, Paul, Bristol BS1 3AG (GB); RHYMES, Jonathan, Bristol BS1 3AG (GB); SHEPPARD, James, Bristol BS1 3AG (GB); HAWORTH, Daniel, Marlborough Wiltshire SN8 2DD (GB)
(74) Representative: Openshaw & Co.
(86) International application number: PCT/GB2014/051771
(87) International publication number: WO 2014/202952

(56) References cited:
- US-A1- 2012 200 084
- US-A1- 2012 255 291

## Description

The present invention relates to the design of apparatus for extracting energy from water currents. Specifically, the invention provides a water current power generation structure for improved alignment of a power generation unit on a support structure.

### BACKGROUND OF THE INVENTION

The direction of current flow in estuaries and tidal races usually changes according to a prescribed periodic pattern. As an example tidal currents typically reverse direction by approximately 180 deg. roughly every six hours when the flood or ebb tides turn. As the tide is turning the current speed is very low or stationary for a short period of time around slack water. This invention seeks to take advantage of such a period of slow moving or stationary flow.

Proposed methods that allow a water current power generator to accommodate significant changes in current direction on a periodic basis include mechanical yaw drives. The turbine motor is yawed around using a geared drive mounted on the turbine nacelle, which reacts against the tower (or vice versa). Water born particles and debris could cause fouling or wear of such a drive unless it is sealed from the external environment (which is expensive on a large diameter yaw bearing). The design requires tight control of mechanical tolerances between the moving gear and the stationary reaction gear. Conventionally, the moving gear and the stationary gear are mesh parallel gears. As a result, there are significant alignment challenges associated with for example a pinion and gear system arranged over a splittable interface of the power generation system. During deployment, any misalignment between the pinion and the gear may result in crashing and damage to the system.

An example for a water current power generation structure including a yaw drive is shown in US 2012/200084.

### SUMMARY OF THE INVENTION

According to one aspect of the present invention, there is provided a water current power generation structure comprising:
a power generation unit including a main body, a mounting portion which extends from the main body and which defines a mounting axis;
a support structure adapted for engagement with a bed of a body of water, and including a support housing;
wherein the structure further comprises a yaw mechanism for rotating the power generation unit relative to the support structure, the mechanism comprising:
   a pinion associated with the mounting portion; and
   a gear associated within the support housing and arranged to engage the pinion to rotate the power generation unit about the mounting axis relative to the support structure; and
   a selective engagement mechanism for selectively engaging the yaw mechanism.

The gear is preferably a stationary gear. The gear may be supported by the mounting portion. The gear may for example be an annular gear.

The gear is preferably arranged to extend around the inner periphery of the support housing or the mounting portion. The gear may comprise straight splines. The splines may extend substantially parallel to the mounting axis of the mounting portion.

The selective engagement mechanism preferably provides mechanical engagement between the gear and the support housing. For example, the selective engagement mechanism may comprise a clutch arranged to selectively allow relative rotation between the gear and the support housing.

The selective engagement mechanism may comprise an intermediate gear rotatable relative to the mounting portion and fixed relative to the support housing. The intermediate gear is preferably selectively engagable with the gear. The gear may comprise an inner gear for engagement with the pinion.

In one embodiment, the gear may comprise tapered splines arranged to engage the intermediate gear. For example, the gear may comprise tapered splines arranged to engage the splines of the intermediate gear. The gear may be of any suitable shape. The gear may for example be tapered inwardly in a direction extending substantially parallel to the mounting axis of the mounting portion. The gear may for example be tapered inwardly in a direction extending towards the support housing. Preferably, the gear is conical.

The gear may be shaped, such as for example tapered or conical, in order to ensure initial engagement between the gear and the intermediate gear of the support housing. The tapered splines of the gear encourage the correction of any slight misalignment between the gears during initial mating of the gears. As a result, the meshing between the gear and the intermediate gear is progressive. The present invention therefore advantageously significantly reduces the possibility of misalignment causing crashing and damage to the gears within the system.

In a further embodiment, the gear may provide an abutment surface comprising at least one engagement feature. The abutment surface of the intermediate gear is preferably arranged to contact or abut an abutment surface provided by the gear of the support housing. The abutment surface of the gear of the support housing preferably comprises at least one engagement feature for mutual engagement with the engagement feature(s) of the intermediate gear.

The at least one engagement feature provided by the intermediate gear and/or the gear may be moveable, for example slideably moveable, with respect to the abutment surface of the intermediate gear and/or the gear. The gear may be provided by any suitable surface of the support housing, for example by a cartridge plate located within the support housing.

The at least one engagement feature of the gear and/or intermediate gear may be any suitable combination of complementary features such as for example projections, pins, ridges, grooves and/or holes which are arranged to provide mutual engagement between the gear and the intermediate gear. The at least one engagement feature of the gear preferably comprises a plurality of radially extending spaced apart splines or teeth. The at least one engagement feature of the gear preferably comprises a plurality of spaced apart projections arranged for mutual engagement with the splines of the intermediate gear. The at least one engagement features of the gear and intermediate gear may comprise a plurality of alignment pins and corresponding alignment apertures for mutual engagement.

The at least one engagement feature(s) of the intermediate gear and/or gear may be located at any suitable location on the gears, for example the at least one engagement feature(s) may be located at or adjacent the perimeter of the gear.

The clutch may for example be a dog clutch or curvic gear interface.

The gear is preferably moveable between an engaged position in which the gear engages the intermediate gear of the support housing, and a disengaged position in which the gear is disengaged from the intermediate gear. For example, in the engaged position tapered splines of the gear engage straight or tapered splines of the intermediate gear. In one embodiment, in the engaged position the engagement feature(s) of the intermediate gear engage the engagement feature(s) of the gear.

The gear may be arranged so as to be brought into engagement with the intermediate gear of the support housing when the mounting portion is mounted on the support housing. The structure may however further comprise an actuator arranged to displace the gear between the engaged position and the disengaged position. For example, the gear may be arranged to be axially moveable relative to the mounting portion in a direction extending substantially parallel to the mounting axis of the mounting portion. The drive mechanism and/or pinion gear may be arranged to move with the gear. The pinion may be arranged to move with the gear. The drive mechanism may be arranged to move with the pinion. The drive mechanism may however be fixed relative to movement of the pinion and/or the gear. The yaw mechanism may comprise a plurality of pinions.

In one embodiment, the selective engagement mechanism comprises a clutch arranged to selectively allow relative rotation between the gear and the support housing. The clutch may be radially expandable to provide a selective engagement between the gear and the support housing. The clutch may for example be disposed radially between the gear and the housing. The clutch may be axially engagable to provide a selective engagement between the gear and the support housing.

### BRIEF DESCRIPTION OF THE DRAWINGS

Figure 1 illustrates a cross-sectional view of a portion of the water current power generating system according to one embodiment of the present invention;
Figure 2 illustrates the intermediate gear of the system of Figure 1;
Figure 3 illustrates a cross-sectional view of a portion of the water current power generating system according to a further embodiment of the present invention;
Figure 4 illustrates a perspective view of the intermediate gear of the system of Figure 3;
Figure 5 illustrates a perspective view of the gear of the system of Figure 3;
Figure 6 illustrates a cross-sectional view of the water current power generating system according to a further embodiment of the present invention;
Figure 7 illustrates a top view of the system of Figure 6.

### DETAILED DESCRIPTION OF THE PREFERRED EMBODIMENTS

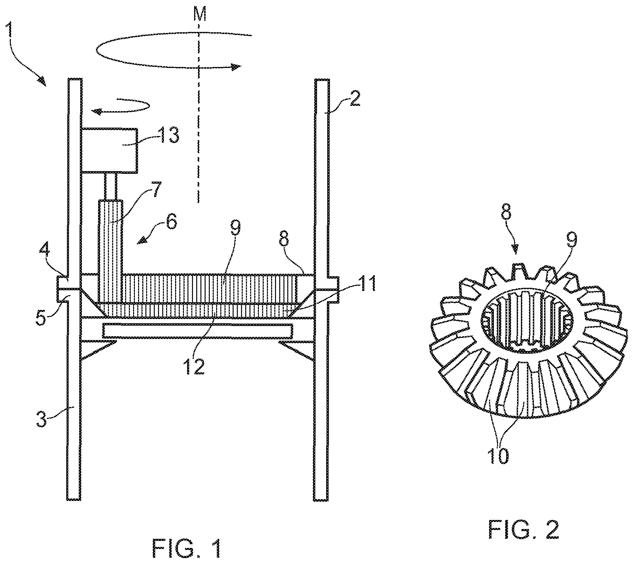

With reference to Figure 1, the water current power generating system 1 comprises a tidal turbine device (not shown) comprising a mounting portion 2 defining a mounting axis M for the device. The device is capable of rotation about rotational axis M relative to its sea or river bed support structure 3 to face the oncoming current flow. The mounting portion 2 has a mounting flange 4 which engages with an associated support flange 5 provided by the support structure 3. The mounting and support flanges 4 and 5 allow the device to be affixed to the support structure 3 in an appropriate manner. A mechanical connection (not shown) is provided between the mounting portion 2 of the water current generating device and its support structure 3 which allows a degree of freedom about the desired axis of rotation M. The mechanical connection is a rotational bearing.

The mounting portion 2 may have any suitable shape. For example the mounting portion 2 may be substantially circular in cross-section. The mounting portion 2 may provide an aperture therethrough. The mounting portion 2 is a hollow cylinder, but could be provided by any suitable shape. It will be appreciated that the mounting portion 2 need not be circular in cross section, but may be provided by any suitable shape. For example, the mounting portion 2 may be tapered, such as for example the mounting portion may be in the form of a truncated cone. The mounting portion may be a hollow prism.

The system may further comprise a coupling (not shown) arranged in use to be moveable between a clamping position and a bearing position. In the clamping position, the device is fixedly located with respect to the support structure. As a result, in the clamping position, the coupling prevents rotation of the device about the mounting axis M. In the bearing position, the device may be rotated about the mounting axis of the system.

The support structure 3 is substantially cylindrical, and defines a circular aperture therethrough. It will be readily appreciated that, as for the mounting portion 2 of the device, the support structure 3 can be of any suitable shape and cross section.

The support structure 3 includes a support flange 5 which defines a substantially circular and substantially continuous support surface onto which the mounting flange 4 of the mounting portion 2 abuts when the device is mounted on the support structure 3.

The mounting portion transfers the load of the device onto the support structure. The substantially circular and substantially continuous nature of the mounting and support flanges serves to distribute the loads around the support structure, and to remove, or substantially reduce, the occurrence of point loading on the support structure.

The substantially circular and substantially continuous nature of the mounting flange of the device and of the support flange of the support structure enables the mounting portion 2 to be located on the support structure 3 in any polar orientation with respect to the mounting axis M.

In addition, this polar mounting freedom of the power generation unit enables the location and orientation of the support structure to be simplified, since the polar orientation of the support housing is not important when the power generating unit can be mounted, and then operated, in any polar orientation with respect to the support structure.

A yaw mechanism 6 is provided for rotating the power generation unit relative to the support structure. The yaw mechanism 6 comprises a gear 8 arranged to engage the pinion 7 to rotate the power generation unit about the mounting axis relative to the support structure about the desired axis of rotation M.;

The yaw mechanism 6 comprises a pinion 7 provided by the mounting portion 2 of the water current generating device and arranged in use to engage the gear 8. As shown in Figure 2, the gear 8 provides an inner gear 9 arranged in use to engage the pinion 7. The gear 8 tapers inwardly in a direction extending towards the support housing 3. The gear 8 is substantially conical in shape. As shown in Figure 2, the gear 8 comprises a plurality of spaced apart tapered splines 10.

The selective engagement mechanism further comprises an intermediate gear 11 fixed relative to the support housing 3. The intermediate gear 11 is selectively engagable with the gear 8. The intermediate gear 11 comprises straight splines 12 extending substantially parallel to the direction of the mounting axis M. Although Figure 1 illustrates the intermediate gear 11 having straight splines it is to be understood that the splines may have any suitable shape and/or alignment for engagement with gear 8, for example the splines could be tapered and/or conical. As there is no relative rotation of the meshing gears the design of the splines or teeth can be varied.

In use, the mounting portion 2 of the device is brought into contact with the support 3. A rotational bearing is formed between the mounting flange 4 and the support flange 5. During assembly, the gear 8 is brought into engagement with the intermediate gear 11 of the support housing 3. Alternatively, the system may further comprise an actuator for displacing the gear 8 into contact with the intermediate gear 11 of the support housing 3 in the engaged position.

The conical shape of the gear 8 ensures initial engagement between the gear 8 and the intermediate gear 11. The tapered splines 10 of the gear 8 encourage the correction of any slight misalignment of teeth or splines during mating of the intermediate gear 11 with the gear 8. As a result of the tapered splines 10 and the conical shape of the gear 8 the meshing between the splines 10 of the gear 8 and the splines 12 of the intermediate gear 11 is progressive and therefore reduces the risk of any damage caused by misalignment.

When the current flow speed is sufficiently low, the hydraulic motor 13 powers the pinion 7 which engages the inner gear 9 of the gear 8. The gear 8 and the mounting portion 2 rotate about rotational axis M. The splines 10 of the gear 8 engage the splines 12 of the intermediate gear 11.

The reaction torque provided by the pinion 7 is greater than the bearing friction, inertia and hydrodynamic loads and in certain cases weight and buoyancy forces acting on the water current power generating device. The mounting portion 2 of the device therefore begins to rotate about the rotational axis M. Once aligned in the correct position, the motor 13 stops powering the pinion 7.

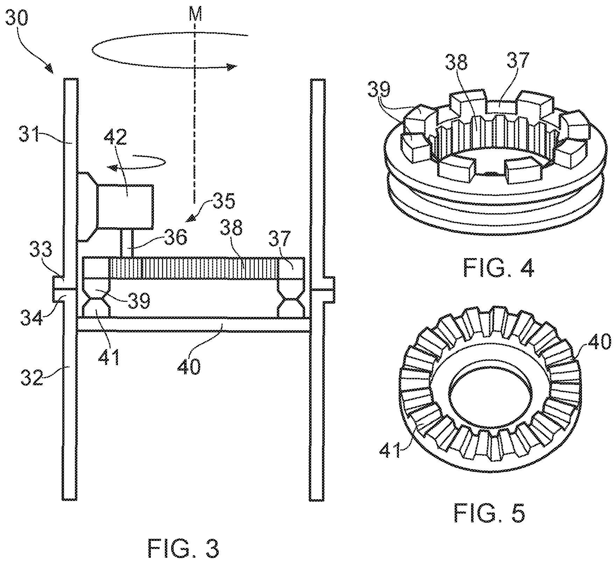

Figures 3 to 5 illustrate a further embodiment of the invention in which the water current power generating system 30 comprises a tidal turbine device (not shown) comprising a mounting portion 31 defining a mounting axis M for the device. The device is capable of rotation about rotational axis M relative to its sea or river bed support structure 32 to face the oncoming current flow. The mounting portion 31 has a mounting flange 33 which engages with an associated support flange 34 provided by the support structure 32. The mounting and support flanges 33 and 34 allow the device to be affixed to the support structure 32 in an appropriate manner. A mechanical connection is provided between the mounting portion 31 of the water current generating device and its support structure 32 which allows a degree of freedom about the desired axis of rotation M.

A yaw mechanism 35 is provided between the mounting portion 31 and its support structure 32 arranged for rotation of the device 30 about the desired axis of rotation M.

The yaw mechanism 35 comprises a pinion 36 provided by the mounting portion 31 of the water current power generating device and arranged in use to engage the gear 37. As shown in Figure 4, the gear 37 provides an inner gear 38 arranged in use to engage the pinion 36. The gear 37 comprises an abutment surface comprising eight spaced apart ridges 43. Although the gear illustrated in Figure 4 comprises eight ridges it is to be understood that the gear may comprise any suitable number of ridges or other suitable features.

The system further comprises an intermediate gear 40 fixed relative to the support housing 32. The intermediate gear 40 is located within the support housing 32. The intermediate gear 40 is provided by a plate. The intermediate gear 40 comprises an abutment surface comprising a plurality of spaced apart splines 41 extending substantially radially. Although Figures 3 to 5 illustrate the gear 37 and intermediate gear 40 comprising complementary ridges and splines it is to be understood that the gear and intermediate gear may comprise any combination of complementary engagement features, such as for example alignment pins and apertures.

In use, the mounting portion 31 of the device is brought into contact with the support 32. During assembly during deployment of the system, the ridges 39 of the gear 37 are brought into engagement with the splines 41 of the intermediate gear 40. Alternatively, the system may further comprise an actuator for displacing the gear 37 into contact with the intermediate gear 40 of the support housing 32 in the engaged position.

When the current flow speed is sufficiently low, the hydraulic motor 42 powers the pinion 35 which engages the inner gear 38 of the gear 37. The splines 41 of the gear 37 engage the splines 41 of the intermediate gear 40. The gear 37 and the mounting portion 31 rotate about rotational axis M.

The reaction torque provided by the pinion 35 is greater than the bearing friction, inertia and hydraulic loads and in certain cases weight and buoyancy forces acting on the water current generating device. The mounting portion 31 of the device therefore begins to rotate about the rotational axis M. Once aligned in the correct position, the motor 42 is stopped from powering the pinion 35.

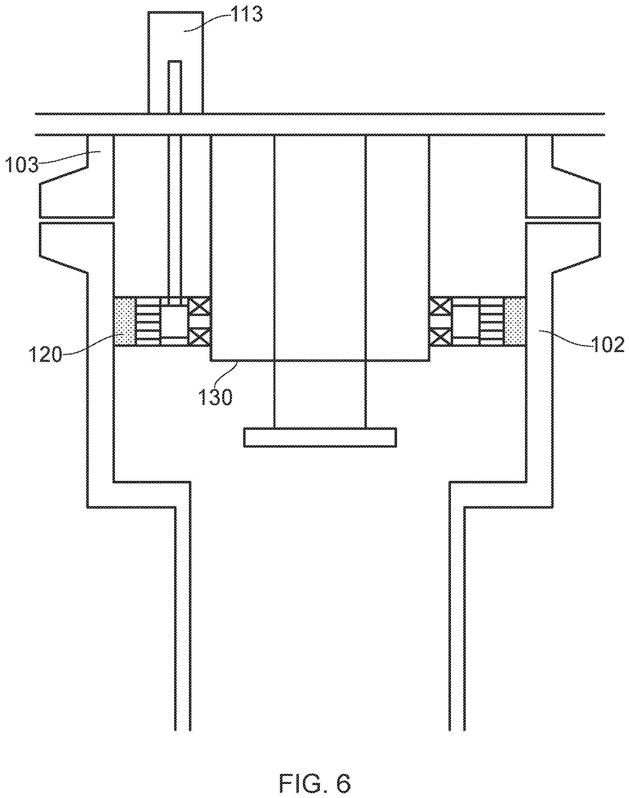

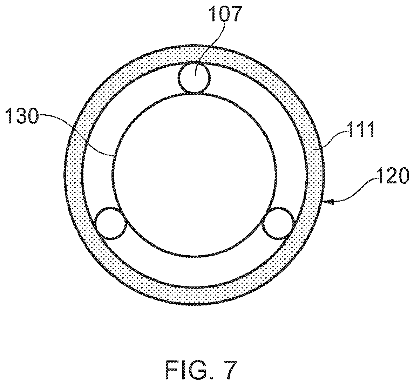

A further embodiment of the present invention is shown in Figures 6 and 7 in which the selective engagement mechanism comprises a clutch 120 arranged to selectively allow relative rotation between the gear 111 and the support housing 102. The yaw mechanism of this embodiment comprises an annular gearbox arrangement which comprises a pinion drive gear 107 mounted within the mounting portion 103 of the structure. The pinion drive gear 107 engages a radially external annular gear 111 and a reaction surface 130 associated with the support housing 102. The gear box is driven by a dry motor 113 from inside the turbine. The gear box may also comprise a plurality of circumferentially distributed non-driven "pinion" gears for load bearing as best seen in Figure 7, in which there are two additional gears. The clutch 120 is arranged to allow selective engagement/disengagement between the annular gear 111 and the support housing 102. The clutch may comprise radially displaceable pads which are forced outwardly (for example by hydraulic pressure) to engage the inner walls of the support housing. The gear box may also comprise driven pinion gears. The gear box may comprise more than one drive for redundancy reasons.

For example, when the turbine is not attached to the support structure, the clutch is operated to take a small diameter. When the turbine is attached to the support housing 102, the clutch takes a larger diameter and engages with a mating surface on the support housing 102. Driving the gearbox therefore causes the turbine to rotate relative to the support housing.

The yaw mechanism could be activated by the movement of existing equipment located on the system, such as for example the clamp or the lifting of the buoyant turbine that normally takes place when a clamp is opened during yawing.

In the embodiment shown in Figures 6 and 7, it can be seen that the meshed parts of the yawing mechanism are not separated when the turbine is removed from the support housing. The meshed parts may therefore be sealed and lubricated. The system of the present invention therefore advantageously does not require any specific alignment of the turbine during deployment onto the support structure in order to avoid any meshing problems associated with the alignment of the pinion and the gears.

Although aspects of the invention have been described with reference to the embodiment shown in the accompanying drawings, it is to be understood that the invention is not limited to the precise embodiment shown and that various changes and modifications may be effected without further inventive skill and effort.

## Claims

1. A water current power generation structure (1) comprising:
a power generation unit including a main body, a mounting portion (2, 31, 103) which extends from the main body and which defines a mounting axis (M);
a support structure adapted for engagement with a bed of a body of water, and including a support housing (3, 32, 102);
wherein the structure (1) further comprises a yaw mechanism (6, 35, 113) for rotating the power generation unit relative to the support structure, the mechanism comprising:
a pinion (7, 36, 107) mounted within the mounting portion (2, 31, 103); and being **characterised by**
a gear (8, 37, 111) selectively engageable with the support housing (3, 32, 102) and arranged to engage the pinion (7, 36, 107) via a gear surface (9, 38, 111) to rotate the power generation unit about the mounting axis (M) relative to the support structure (3, 32, 102); and
a selective engagement mechanism (10, 39, 120) for selectively engaging the yaw mechanism (6, 35, 113);
wherein the selective engagement mechanism (10, 39, 120) provides mechanical or frictional engagement between the gear (8, 37, 111) and the support housing (3, 32, 102).

2. A structure (1) as claimed in claim 1, in which the gear (8, 37, 111) is arranged to extend around the inner periphery of the support housing (3, 32, 102) or the mounting portion (2, 31, 103).

3. A structure (1) as claimed in claim 1 or 2, in which the selective engagement (10, 39, 120) mechanism comprises a clutch (120) arranged to selectively allow relative rotation between the gear (111) and the support housing (102).

4. A structure (1) as claimed in claim 1 or 2, in which the selective engagement mechanism (10, 39) comprises an intermediate gear (11, 40) rotatable relative to the mounting portion (2, 31) and fixed relative to the support housing (3, 32), and in which the intermediate gear (11, 40) is selectively engagable with the gear (8, 37).

5. A structure (1) as claimed in claim 4, in which the gear (8, 37) provides an abutment surface comprising at least one engagement feature (10, 39), and in which the intermediate gear (11, 40) provides an abutment surface comprising at least one engagement feature (12, 41) for mutual engagement with the engagement feature(s) (10, 39) of the gear (8, 37).

6. A structure (1) as claimed in claim 5, in which the at least one engagement feature is moveable with respect to the abutment surface of the intermediate gear (11, 40) and/or the gear (8, 37).

7. A structure (1) as claimed in claim 6, in which the at least one engagement feature is slidably moveable with respect to the abutment surface of the intermediate gear (11, 40) and/or the gear (8, 37).

8. A structure (1) as claimed in any one of claims 5 to 7, in which the at least one engagement feature (12, 41) of the intermediate gear (11, 40) comprises a plurality of radially extending splines, and in which the at least one engagement feature of the gear (8, 37) comprises a plurality of projections (10, 39) arranged for mutual engagement with the splines (10, 39) of the gear (8, 37).

9. A structure (1) as claimed in any one of claims 5 to 7, in which the at least one engagement features (10, 39) of the gear (8, 37) and intermediate gear (11, 40) comprise a plurality of alignment pins and corresponding alignment apertures for mutual engagement.

10. A structure (1) as claimed in any one of claims 5 to 9, in which the at least one engagement feature(s) (12, 41, 10, 39) of the intermediate gear (11, 40) and/or gear (8, 37) are located at or adjacent the perimeter of the intermediate gear (11, 40) and/or gear (8, 37).

11. A structure (1) as claimed in any one of claims 4 to 10, in which the gear (8, 37) is moveable between an engaged position in which the gear (8, 37) engages the intermediate gear (11, 40) of the support housing (3, 32, 102), and a disengaged position in which the gear (8, 37) is disengaged from the intermediate gear (11, 40).

12. A structure (1) as claimed in claim 11, in which the intermediate gear (11, 40) engages the gear (8, 37) when the mounting portion (2, 31, 103) is mounted on the support housing (3, 32, 102).

13. A structure (1) as claimed in claim 11, further comprising an actuator arranged to displace the gear (8, 37) between the engaged position and the disengaged position.

14. A structure (1) as claimed in either of claims 11 and 13, in which the gear (8, 37) is axially moveable relative to the mounting portion (2, 31, 103) in a direction extending substantially parallel to the mounting axis of the mounting portion (2, 31, 103).

15. A structure (1) as claimed in any preceding claim, in which the yaw mechanism (6, 35, 113) comprises a plurality of pinions (7, 36, 107).

## Patentansprüche

1. Wasserströmungsstromerzeugungsstruktur (1), Folgendes umfassend:
eine Stromerzeugungseinheit, einschließlich eines Hauptkörpers, eines Montageabschnitts (2, 31, 103), der sich von dem Hauptkörper aus erstreckt und der eine Montageachse (M) definiert;
eine Stützstruktur, die für einen Eingriff mit einem Gewässerbett angepasst ist und ein Stützgehäuse (3, 32, 102) beinhaltet;
wobei die Struktur (1) ferner einen Giermechanismus (6, 35, 113) zum Drehen der Stromerzeugungseinheit relativ zu der Stützstruktur umfasst, wobei der Mechanismus Folgendes umfasst:
ein Ritzel (7, 36, 107), das in dem Montageabschnitt (2, 31, 103) montiert ist; und durch Folgendes gekennzeichnet ist:
ein Zahnrad (8, 37, 111), das selektiv mit dem Stützgehäuse (3, 32, 102) in Eingriff genommen werden kann und angeordnet ist, um über eine Zahnradoberfläche (9, 38, 111) das Ritzel (7, 36, 107) in Eingriff zu nehmen, um die Stromerzeugungseinheit um die Montageachse (M) herum relativ zu der Stützstruktur (3, 32, 102) zu drehen; und
einen selektiven Eingriffsmechanismus (10, 39, 120) zum selektiven Ineingriffnehmen des Giermechanismus (6, 35, 113);
wobei der selektive Eingriffsmechanismus (10, 39, 120) einen mechanischen oder Reibungseingriff zwischen dem Zahnrad (8, 37, 111) und dem Stützgehäuse (3, 32, 102) bereitstellt.

2. Struktur (1) nach Anspruch 1, in der das Zahnrad (8, 37, 111) angeordnet ist, um sich um den Innenumfang des Stützgehäuses (3, 32, 102) oder des Montageabschnitts (2, 31, 103) herum zu erstrecken.

3. Struktur (1) nach Anspruch 1 oder 2, in der der selektiven Eingriffs(10, 39, 120)mechanismus eine Kupplung (120) umfasst, die angeordnet ist, um eine relative Drehung zwischen dem Zahnrad (111) und dem Stützgehäuse (102) zu ermöglichen.

4. Struktur (1) nach Anspruch 1 oder 2, in der der selektiven Eingriffsmechanismus (10, 39) ein Zwischenzahnrad (11, 40) umfasst, das relativ zu dem Montageabschnitt (2, 31) drehbar ist und relativ zu dem Stützgehäuse (3, 32) fixiert ist, und in der das Zwischenzahnrad (11, 40) selektiv mit dem Zahnrad (8, 37) in Eingriff genommen werden kann.

5. Struktur (1) nach Anspruch 4, in der das Getriebe (8, 37) eine Auflageroberfläche bereitstellt, die wenigstens ein Eingriffsmerkmal (10, 39) umfasst, und in der das Zwischenzahnrad (11, 40) eine Auflageroberfläche bereitstellt, die wenigstens ein Eingriffsmerkmal (12, 41) zum gegenseitigen Eingriff mit dem Eingriffsmerkmal/den Eingriffsmerkmalen (10, 39) des Zahnrads (8, 37) bereitstellt.

6. Struktur (1) nach Anspruch 5, in der das wenigstens eine Eingriffsmerkmal in Bezug auf die Auflageroberfläche des Zwischenzahnrads (11, 40) und/oder auf das Zahnrad (8, 37) beweglich ist.

7. Struktur (1) nach Anspruch 6, in der das wenigstens eine Eingriffsmerkmal in Bezug auf die Auflageroberfläche des Zwischenzahnrads (11, 40) und/oder auf das Zahnrad (8, 37) gleitend beweglich ist.

8. Struktur (1) nach einem der Ansprüche 5 bis 7, in der das wenigstens eine Eingriffsmerkmal (12, 41) des Zwischenzahnrads (11, 40) mehrere sich radial erstreckende Keile umfasst, und in der das wenigstens eine Eingriffsmerkmal des Zahnrads (8, 37) mehrere Vorsprünge (10, 39) umfasst, die für den gegenseitigen Eingriff mit den Keilen (10, 39) des Zahnrads (8, 37) angeordnet sind.

9. Struktur (1) nach einem der Ansprüche 5 bis 7, in der das wenigstens eine Eingriffsmerkmal (10, 39) des Zahnrads (8, 37) und des Zwischenzahnrads (11, 40) mehrere Ausrichtungsstifte und entsprechende Ausrichtungsöffnungen für den gegenseitigen Eingriff umfassen.

10. Struktur (1) nach einem der Ansprüche 5 bis 9, in der sich das/die wenigstens eine Eingriffsmerkmal/Eingriffsmerkmale (12, 41, 10, 39) des Zwischenzahnrads (11, 40) und/oder des Zahnrads (8, 37) auf der Umfangslänge des Zwischenzahnrads (11, 40) und/oder Zahnrads (8, 37) oder daneben befindet.

11. Struktur (1) nach einem der Ansprüche 4 bis 10, in der das Zahnrad (8, 37) zwischen einer in Eingriff genommenen Position, in der das Zahnrad (8, 37) das Zwischenzahnrad (11, 40) des Stützgehäuses (3, 32, 102) in Eingriff nimmt, und einer gelösten Position, in der das Zahnrad (8, 37) von dem Zwischenzahnrad (11, 40) gelöst ist, beweglich ist.

12. Struktur (1) nach Anspruch 11, in der das Zwischenzahnrad (11, 40) das Zahnrad (8, 37) in Eingriff nimmt, wenn der Montageabschnitt (2, 31, 103) auf dem Stützgehäuse (3, 32, 102) montiert ist.

13. Struktur (1) nach Anspruch 11, die ferner einen Stellantrieb umfasst, der angeordnet ist, um das Zahnrad (8, 37) zwischen der in Eingriff genommenen Position und der gelösten Position zu verschieben.

14. Struktur (1) nach entweder Anspruch 11 oder 13, in der das Zahnrad (8, 37) relativ zu dem Montageabschnitt (2, 31, 103) in einer Richtung axial beweglich ist, die sich im Wesentlichen parallel zu der Montageachse des Montageabschnitts (2, 31, 103) erstreckt.

15. Struktur (1) nach einem der vorhergehenden Ansprüche, in der der Giermechanismus (6, 35, 113) mehrere Ritzel (7, 36, 107) umfasst.

## Revendications

1. Structure de production d'énergie à courant d'eau (1) comprenant :
une unité de production d'énergie comportant un corps principal, une section de montage (2, 31, 103) qui s'étend à partir du corps principal et qui définit un axe de montage (M) ;
une structure de support conçue pour être mise en prise avec un lit d'une masse d'eau, et comportant un logement de support (3, 32, 102) ;
la structure (1) comprenant en outre un mécanisme d'orientation (6, 35, 113) pour faire tourner l'unité de production d'énergie par rapport à la structure de support, le mécanisme comprenant :
un pignon (7, 36, 107) monté à l'intérieur de la section de montage (2, 31, 103) ; et étant **caractérisé par**
un engrenage (8, 37, 111) pouvant être mis en prise de manière sélective avec le logement de support (3, 32, 102) et agencé de façon à mettre en prise le pignon (7, 36, 107) par l'intermédiaire d'une surface d'engrenage (9, 38, 111) pour faire tourner l'unité de production d'énergie autour de l'axe de montage (M) par rapport à la structure de support (3, 32, 102) ; et
un mécanisme de mise en prise sélective (10, 39, 120) permettant la mise en prise sélective du mécanisme d'orientation (6, 35, 113) ;
le mécanisme de mise en prise sélective (10, 39, 120) fournissant une mise en prise mécanique ou par friction entre l'engrenage (8, 37, 111) et le logement de support (3, 32, 102).

2. Structure (1) selon la revendication 1, dans laquelle l'engrenage (8, 37, 111) est agencé de façon à s'étendre autour de la périphérie intérieure du logement de support (3, 32, 102) ou de la section de montage (2, 31, 103).

3. Structure (1) selon la revendication 1 ou 2, dans laquelle le mécanisme de mise en prise sélective (10, 39, 120) comprend un embrayage (120) agencé de façon à admettre de manière sélective une rotation relative entre l'engrenage (111) et le logement de support (102).

4. Structure (1) selon la revendication 1 ou 2, dans laquelle le mécanisme de mise en prise sélective (10, 39) comprend un engrenage intermédiaire (11, 40) rotatif par rapport à la section de montage (2, 31) et fixe par rapport au logement de support (3, 32), et dans laquelle l'engrenage intermédiaire (11, 40) peut être sélectivement mis en prise avec l'engrenage (8, 37).

5. Structure (1) selon la revendication 4, dans laquelle l'engrenage (8, 37) fournit une surface de butée comprenant au moins un élément de mise en prise (10, 39), et dans laquelle l'engrenage intermédiaire (11, 40) fournit une surface de butée comprenant au moins un élément de mise en prise (12, 41) destiné à venir en prise mutuelle avec le ou les élément(s) de mise en prise (10, 39) de l'engrenage (8, 37).

6. Structure (1) selon la revendication 5, dans laquelle l'au moins un élément de mise en prise est déplaçable par rapport à la surface de butée de l'engrenage intermédiaire (11, 40) et/ou l'engrenage (8, 37).

7. Structure (1) selon la revendication 6, dans laquelle l'au moins un élément de mise en prise est déplaçable de manière coulissante par rapport à la surface de butée de l'engrenage intermédiaire (11, 40) et/ou l'engrenage (8, 37).

8. Structure (1) selon l'une quelconque des revendications 5 à 7, dans laquelle l'au moins un élément de mise en prise (12, 41) de l'engrenage intermédiaire (11, 40) comprend une pluralité de cannelures s'étendant radialement, et dans laquelle ledit au moins un élément de mise en prise de l'engrenage (8, 37) comprend une pluralité de saillies (10, 39) agencées pour venir en prise mutuelle avec les cannelures (10, 39) de l'engrenage (8, 37).

9. Structure (1) selon l'une quelconque des revendications 5 à 7, dans laquelle l'au moins un élément de mise en prise (10, 39) de l'engrenage (8, 37) et de l'engrenage intermédiaire (11, 40) comprennent une pluralité de broches d'alignement et d'ouvertures d'alignement correspondantes destinées à venir en prise mutuelle.

10. Structure (1) selon l'une quelconque des revendications 5 à 9, dans laquelle l'au moins un élément de mise en prise (12, 41, 10, 39) de l'engrenage intermédiaire (11, 40) et/ou de l'engrenage (8, 37) sont situés au niveau ou à proximité immédiate du périmètre de l'engrenage intermédiaire (11, 40) et/ou de l'engrenage (8, 37).

11. Structure (1) selon l'une quelconque des revendications 4 à 10, dans laquelle l'engrenage (8, 37) est déplaçable entre une position de prise dans laquelle l'engrenage (8, 37) vient en prise avec l'engrenage intermédiaire (11, 40) du logement de support (3, 32, 102) et une position hors prise dans laquelle l'engrenage (8, 37) est hors de prise avec l'engrenage intermédiaire (11, 40).

12. Structure (1) selon la revendication 11, dans laquelle l'engrenage intermédiaire (11, 40) vient en prise avec l'engrenage (8, 37) lorsque la section de montage (2, 31, 103) est montée sur le logement de support (3, 32, 102).

13. Structure (1) selon la revendication 11, comprenant en outre un actionneur agencé pour mouvoir l'engrenage (8, 37) entre la position de prise et la position hors prise.

14. Structure (1) selon l'une quelconque des revendications 11 et 13, dans laquelle l'engrenage (8, 37) est déplaçable axialement par rapport à la section de montage (2, 31, 103) dans une direction s'étendant sensiblement parallèlement à l'axe de montage de la section de montage (2, 31, 103).

15. Structure (1) selon l'une quelconque des revendications précédentes, dans laquelle le mécanisme d'orientation (6, 35, 113) comprend une pluralité de pignons (7, 36, 107).
